# EUROPÄISCHE PATENTSCHRIFT

(11) **EP 1 553 268 B1**
(45) Veröffentlichungstag und Bekanntmachung des Hinweises auf die Patenterteilung: **23.08.2006**
(21) Anmeldenummer: 04105579.9
(22) Anmeldetag: 08.11.2004
(51) Int. Cl.: F01N 3/023, F01N 9/00, F01N 11/00

(54) **Filtereinrichtung, insbesondere für eine Abgasanlage einer Brennkraftmaschine**
Filter device, especially for an exhaust system of an internal combustion engine
Dispositif de filtration, en particulier du système d'échappement d'un moteur à combustion interne

(30) Priorität: 09.01.2004 DE 102004001421
(43) Veröffentlichungstag der Anmeldung: 13.07.2005
(73) Patentinhaber: ROBERT BOSCH GMBH, 70442 Stuttgart (DE)
(72) Erfinder: Mueller, Klaus, 71732 Tamm (DE); Schernewski, Ralf, 76133 Karlsruhe (DE)

(56) Entgegenhaltungen:
- DE-A1- 10 014 224
- DE-A1- 10 128 936
- PATENT ABSTRACTS OF JAPAN Bd. 1996, Nr. 08, 30. August 1996 (1996-08-30) & JP 08 109818 A (NIPPONDENSO CO LTD; TOYOTA MOTOR CORP), 30. April 1996 (1996-04-30)
- PATENT ABSTRACTS OF JAPAN Bd. 1995, Nr. 04, 31. Mai 1995 (1995-05-31) & JP 07 011936 A (TOYOTA AUTOM LOOM WORKS LTD; others: 01), 13. Januar 1995 (1995-01-13)

## Beschreibung

### Stand der Technik

Die Erfindung betrifft eine Filtereinrichtung, insbesondere für eine Abgasanlage einer Brennkraftmaschine, welche Partikel aus einem Gasstrom herausfiltert und welche ein Gehäuse und mindestens eine in dem Gehäuse angeordnete Filterstruktur aufweißt, durch welche der Gasstrom hindurchtreten kann.

Eine Filtereinrichtung der eingangsgenannten Art ist aus der DE 100 14 224 A1 bekannt. Dort ist eine Abgasanlage mit einem Vorkatalysator und einem Filter gezeigt, welche zu einer Diesel-Brennkraftmaschine gehört. Stromaufwärts vom Vorkatalysator und stromabwärts vom Filter ist jeweils ein Drucksensor vorgesehen. Diese beiden Sensoren wirken als Differenzdrucksensor und stellen ein Differenzdrucksignal bereit, welches den Differenzdruck zwischen Eingang und Ausgang der aus Vorkatalysator und Filter bestehenden Anordnung charakterisiert. Auf der Basis dieses Differenzdrucks wird ein Beladungszustand des Filters ermittelt.

Die Kenntnis des aktuellen Beladungszustands des Filters ist für den Betrieb der Brennkraftmaschine und insbesondere der Abgasanlage sehr wichtig. Wenn der Filter einen bestimmten Beladungszustand überschreitet, steigt der Abgasgegendruck, was zu einer Beeinträchtigung des Betriebs der Brennkraftmaschine führen kann. Es ist daher bekannt, dann, wenn der Filter einen bestimmten Beladungszustand erreicht hat, diesen zu regenerieren, beispielsweise, indem die im Filter zurückgehaltenen Rußpartikel verbrannt werden. Die Regenerierung muss rechtzeitig erfolgen, da sie bei einer zu starken Beladung beeinträchtigt wird. Sie sollte aber auch nicht zu oft, erfolgen um den Kraftstoffverbrauch der Brennkraftmaschine nicht unnötig zu erhöhen.

Die DE 101 28 936 A1 offenbart eine Filtereinrichtung mit einer Filterstruktur, die eine Vielzahl keilförmiger Filtertaschen umfasst, die von Filterwänden begrenzt werden. Als Material wird für die Filterstruktur eine offenporiges Sintermetall verwendet.

Die vorliegende Erfindung hat die Aufgabe, eine Filtereinrichtung der eingangs genannten Art so weiter zu bilden, dass ihr Beladungszustand möglichst exakt bestimmt werden kann. Darüber hinaus wäre es wünschenswert, wenn unabhängig vom Beladungszustand der Filtereinrichtung Informationen über ihren Betriebszustand vorliegen, wenn also eine kontinuierliche Diagnose der Filtereinrichtung möglich wäre.

Diese Aufgabe wird bei einer Filtereinrichtung der eingangs genannten Art dadurch gelöst, dass die Filterstruktur mindestens eine Filterwand aus einem offenporigen Filtermaterial umfasst, und dass mindestens zwei paarweise angeordnete Drucksensoren vorgesehen sind, von denen der eine Drucksensor wenigstens annähernd unmittelbar stromaufwärts und der andere Drucksensor wenigstens annähernd unmittelbar stromabwärts von der Filterwand angeordnet ist.

### Vorteile der Erfindung

Bei der erfindungsgemäßen Filtereinrichtung wird im wesentlichen nur jener Druckabfall erfasst, welcher beim Durchtritt des Gasstromes durch die Filterwand auftritt. Ein Druckabfall, welcher von laminaren und/oder turbulenten Strömungsverlusten im Filtergehäuse und/oder im Strömungsweg vor beziehungsweise nach dem Filtergehäuse herrührt, wird von den erfindungsgemäß angeordneten Drucksensoren nicht oder zumindest nur im geringen Umfang erfasst. Für die Funktionsfähigkeit der Filterstruktur ist jedoch nur jener Druckabfall aussagekräftig, welcher über die Filterwand hinweg auftritt. Genau dieser Druckabfall wird vorliegend erfasst.

Bei der erfindungsgemäßen Abgasanlage ist daher eine sehr präzise Erfassung der Funktionsfähigkeit der Filtereinrichtung möglich, was nicht nur Rückschlüsse auf die Beladung der Filterstruktur mit Partikeln gestattet, sondern ganz allgemein eine Funktionsdiagnose der Filtereinrichtung ermöglicht. Besonders deutlich sind die Vorteile der erfindungsgemäßen Abgasanlage bei einer Filterstruktur, an der noch wenige Partikel abgelagert sind, da bei einer solchen "sauberen" Filterstruktur jener Druckabfall, der über die Filterwand hinweg auftritt, nur einen geringen Anteil an dem Gesamtdruckverlust in der Filtereinrichtung ausmacht.

Vorteilhafte Weiterbildungen der Erfindung sind in Unteransprüchen angegeben.

Zunächst wird vorgeschlagen, dass die Filterstruktur Filtertaschen, welche von Filterwänden begrenzt werden, und einen stromaufwärts von den Filterwänden gelegenen Strömungsabschnitt umfasst, der gegenüber einem stromabwärts von der Filterwand liegenden Bereich durch eine Dichtwand abgetrennt ist, und dass die beiden Drucksensoren eines Drucksensorpaares zu beiden Seiten der Dichtwand angeordnet sind. Diese Stelle ist sehr gut zugänglich, was die Integration des Drucksensorpaares in die Filtereinrichtung erleichtert. Letztlich werden hierdurch die Herstellkosten der erfindungsgemäßen Abgasanlage gesenkt.

Ferner ist möglich, dass die Filterstruktur Filtertaschen aufweist, welche von Filterwänden begrenzt werden, und das die beiden Drucksensoren eines Drucksensorpaares zu beiden Seiten einer Filterwand einander wenigstens in etwa gegenüberliegend angeordnet sind. Hierdurch werden besonders präzise Messergebnisse erzielt.

In Weiterbildung hierzu wird vorgeschlagen, dass die Filtereinrichtung mehrere Drucksensorpaare umfasst, und dass die Drucksensoren eines Drucksensorpaars von den Drucksensoren eines anderen Drucksensorpaares in Strömungsrichtung gesehen beabstandet sind. Dies gestattet die Messung des Druckabfalls an unterschiedlichen Stellen der Filterwand. In der Folge können Rückschlüsse auf die örtliche Beladung der Filtereinrichtung mit Partikeln gezogen werden. Hierdurch wird eine noch präzisere Erfassung des Beladungszustands der Filtereinrichtung ermöglicht.

Besonders gut arbeitet die erfindungsgemäße Filtereinrichtung dann, wenn das Filtermaterial eine offenporige Struktur, beispielsweise ein Sintermaterial, umfasst.

### Zeichnungen

Nach folgend werden besonders bevorzugte Ausführungsbeispiele der vorliegenden Erfindung unter Bezugnahme auf die beiliegende Zeichnung näher erläutert. In der Zeichnung zeigen:
- Figur 1:: eine schematische Darstellung einer Brennkraftmaschine mit einer Abgasanlage mit einem Partikelfilter;
- Figur 2:: einen Schnitt durch den Partikelfilter von Figur 1 mit zwei Drucksensoren;
- Figur 3:: eine perspektivische Darstellung einer Filterstruktur der Partikelfilters von Figur 2 mit einer alternativen Anordnung der Drucksensoren;
- Figur 4:: eine teilweise geschnittene perspektivische Darstellung einer Filtertasche der Filterstruktur von Figur 3; und
- Figur 5:: einen schematischen Schnitt durch einen Bereich der Filterstruktur von Figur 3 mit einer nochmals alternativen Anordnung der Drucksensoren.

### Beschreibung der Ausführungsbeispiele

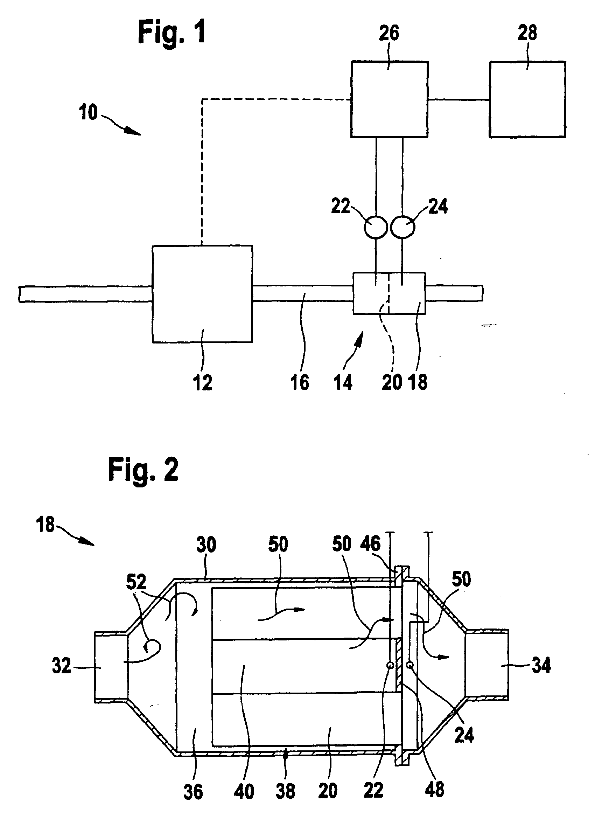

Eine Diesel-Brennkraftmaschine trägt in Figur 1 insgesamt das Bezugszeichen 10. Sie umfasst einen Motorblock 12 und ein Abgasanlage 14. Das Abgasanlage 14 wiederum umfasst ein Abgasrohr 16, in dem eine Filtereinrichtung 18 angeordnet ist. Diese umfasst eine in Figur 1 nur schematisch durch eine gestrichelte Linie angedeutete Filterwand 20. Unmittelbar stromaufwärts von der Filterwand 20 ist ein erster Drucksensor 22, und unmittelbar stromabwärts von der Filterwand 20 ein zweiter Drucksensor 24 angeordnet. Beide Drucksensoren 22 und 24 liefern Signale an eine Steuer -und Regeleinrichtung 26. Diese ist wiederum mit einem Fehlerspeicher 28 verbunden. Die Steuer- und Regeleinrichtung 26 steuert auch ganz allgemein den Betrieb der Brennkraftmaschine 10, was durch eine gestrichelte Linie angedeutet ist, welche die Steuer- und Regeleinrichtung 26 mit dem Motorblock 12 verbindet.

Die Filtereinrichtung 18 ist in Figur 2 stärker im Detail dargestellt: Sie umfasst ein zylindrisches Gehäuse 30 mit einem Einlass 32 und einem Auslass 34. Vom Einlass 32 aus erweitert sich der Durchmesser des Gehäuses 30 konisch zu einem Zentralabschnitt 36 hin. Im Bereich des Auslasses 34 verringert sich der Durchmesser analog vom Zentralabschnitt 36 zum Auslass 34 hin.

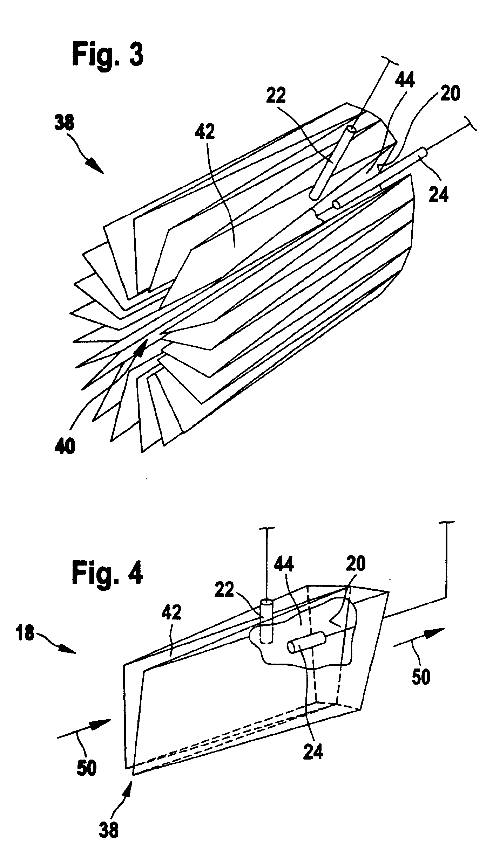

Im Zentralabschnitt 36 des Gehäuses 30 ist eine insgesamt zylindrische Filterstruktur 38 aufgenommen. Diese ist stärker detailliert in Figur 3 gezeigt und umfasst einen zentrischen und zylindrischen, zur Längsachse des Gehäuses 30 koaxialen Hohlraum 40, von dessen gedachter Umfangswand sich eine Vielzahl von Filterwänden 20 nach radial außen erstrecken (in Figur 3 ist aus Gründen der Übersichtlichkeit nur eine Filterwand mit einem Bezugszeichen versehen).

Die Filterwände 20 sind insgesamt in etwa rechteckig. Ein vorderer Längsrand einer Filterwand 20 ist mit dem vorderen Längsrand der auf der einen Seite benachbarten Filterwand 20 verbunden, wohingegen der hintere Längsrand der Filterwand 20 mit dem entsprechenden hinteren Längsrand der auf der anderen Seite benachbarten Filterwand 20 verbunden ist. Hierdurch ergibt sich eine in der radialen Draufsicht zickzackartige Struktur, welche zwischen den Filterwänden 20 kuchenstückartige Filtertaschen 44 und dazwischen liegende Freiräume 42 bildet.

Jene Freiräume 42 sind nach radial innen, nach radial außen, und am stromaufwärtigen (also in Figur linken) Rand offen, wohingegen sie an ihrem stromabwärtigen (also in Figur 2 rechten) Rand durch die aneinanderliegenden hinteren Ränder der Filterwände 20 geschlossen sind. Die Filtertaschen 44 sind dagegen radial innen und radial außen sowie an ihrem stromaufwärtigen (also in Figur 2 linken) Rand geschlossen, wohingegen sie an ihrem stromabwärtigen (also in Figur 2 rechten) Rand offen sind. Die Filterwände 20, welche die Freiräume 42 bzw. die Filtertaschen 44 begrenzen, sind aus einem offenporigen Material, beispielsweise Sintermetall.

Die Filterstruktur 38 ist im Gehäuse 30 an ihrem in Figur 2 rechten und radial äußeren Rand in einem sich nach radial innen erstreckenden Flansch 46 des Gehäuses 30 fluiddicht verklemmt. Der Hohlraum 40 ist analog hierzu an seinem in Figur 2 rechten Ende durch eine Dichtwand 48 verschlossen. Die beiden Drucksensoren 22 und 24 sind zu beiden Seiten der Dichtwand 48 angeordnet.

Die in Figur 1 gezeigte Abgasanlage 14 und die in Figur 2 gezeigte Filtereinrichtung 18 arbeiten folgendermaßen: Beim Betrieb der Brennkraftmaschine 10 werden bei der Verbrennung von Kraftstoff Rußpartikel erzeugt. Diese werden aus dem Motorblock 12 über das Abgasrohr 16 abgeleitet. Über den Einlass 32 gelangen sie in das Gehäuse 30 der Filtereinrichtung 18. Dort strömt der Abgasstrom entsprechend der Pfeile 50 in die Freiräume 42, tritt durch die Filterwand 20 hindurch, gelangt in die Filtertaschen 44 und verlässt die Filtereinrichtung 18 über den Auslass 34. Beim Durchtritt durch die Filterwand 20 werden im Abgas vorhandenen Rußpartikel an der Filterwand 20 abgeschieden und dort abgelagert.

Beim Durchtritt des Abgases durch die Filterwand 20 kommt es zu einem Druckabfall. Dieser wird von den beiden Drucksensoren 22 und 24 erfasst. Die entsprechenden Signale werden zur Steuer- und Regeleinrichtung 26 geleitet. Dieser Druckabfall ist dann, wenn noch keine oder nur sehr wenig Rußpartikel in der Filtereinrichtung 18 abgeschieden sind, vergleichsweise gering. Im Laufe der Zeit werden jedoch immer mehr Rußpartikel in der Filtereinrichtung 18 abgeschieden, was zu einer allmählichen Reduzierung der Durchlässigkeit der Filterwand 20 für den Abgasstrom führt. Dies führt zu einem Anstieg des Druckabfalls über die Filterwand 20 hinweg. Dies wird von den beiden Drucksensoren 22 und 24 erfasst.

Der Abgasstrom erfährt in der Filtereinrichtung 18 nicht nur aufgrund der Filterwand 20 einen Druckabfall. Bei der Expansion des Gasstromes vom Einlass 32 zum Zentralabschnitt 36 hin kommt es, wie durch die Pfeile 52 angedeutet ist, zu Turbulenzen, welche ebenfalls einen Druckabfall verursachen. Dieser Druckabfall ist jedoch von der Filterfunktion der Filtereinrichtung 18 unabhängig. Ebenso kommt es bei der Strömung vom Zentralabschnitt 36 zum Auslass 34 hin zu Turbulenzen, die einen Druckabfall zur Folge haben. Auch dieser Druckabfall ist von der Funktion der Filterwand 20 beziehungsweise von deren Beladung mit Rußpartikeln unabhängig.

Durch die Anordnung der beiden Sensoren 22 und 24 unmittelbar vor beziehungsweise unmittelbar hinter der Dichtwand 48 wird im Wesentlichen nur jener Druckverlust von den beiden Drucksensoren 22 und 24 erfasst, der tatsächlich von der Drosselwirkung der Filterwand 20 herrührt. Durch die Positionierung der beiden Drucksensoren 22 und 24 erhält man daher ein für die Beladung der Filterwand 20 mit Rußpartikeln besonders charakteristisches Signal, welches von den sonstigen Strömungsverhältnissen innerhalb des Gehäuses 30 der Filtereinrichtung 18 weitgehend unbeeinflusst ist.

Insbesondere dann, wenn die Filtereinrichtung 18 noch vergleichsweise "sauber" ist, also noch wenig Rußpartikel in der Filtereinrichtung 18 abgeschieden sind, kann eine Funktionsdiagnose der Filterwand 20 durchgeführt werden. Ein besonders geringer Druckabfall über die Filterwand 20 bei "sauberer" Filtereinrichtung 18 würde beispielsweise auf eine Beschädigung, beispielsweise ein Loch, der Filterwand 20 hindeuten. Dies würde zu einem entsprechenden Eintrag in den Fehlerspeicher 28 führen, der von einem Diagnosegerät ausgelesen werden kann. Da aufgrund der Positionierung der beiden Sensoren 22 und 24 auch die Beladung der Filterwand 20 mit Rußpartikeln vergleichsweise präzise erfasst werden kann, können Regenerationsmaßnahmen der Filtereinrichtung 18, beispielsweise ein Abbrennen der abgelagerten Rußpartikel, genau zum erforderlichen Zeitpunkt eingeleitet werden. Hierdurch wird die Betriebssicherheit der Brennkraftmaschine 10 erhöht und letztlich wird sogar das Emissionsverhalten verbessert und der Kraftstoffverbrauch gesenkt.

Die Darstellung in Figur 3 war bereits im Zusammenhang mit der Erläuterung der Filterstruktur 38 der Filtereinrichtung 18 von Figur 2 eingeführt worden. Tatsächlich ist in Figur 3 jedoch eine Anordnung der beiden Drucksensoren 22 und 24 gezeigt, welche sich von der Anordnung in Figur 2 unterscheidet: In Figur 3 sind die beiden Drucksensoren 22 und 24 nämlich nicht beidseits der Dichtwand 48, sondern unmittelbar zu beiden Seiten einer zwischen einem Freiraum 42 und einer Filtertasche 44 liegenden Filterwand 20 angeordnet. Dabei liegen sich die eigentlichen Sensorspitzen der beiden Drucksensoren 22 und 24 in etwa gegenüber. Besonders deutlich geht dieser Sachverhalt aus Figur 4 hervor, in der die Filterstruktur 38 nur im Bereich der Sensoren 22 und 24 gezeigt ist.

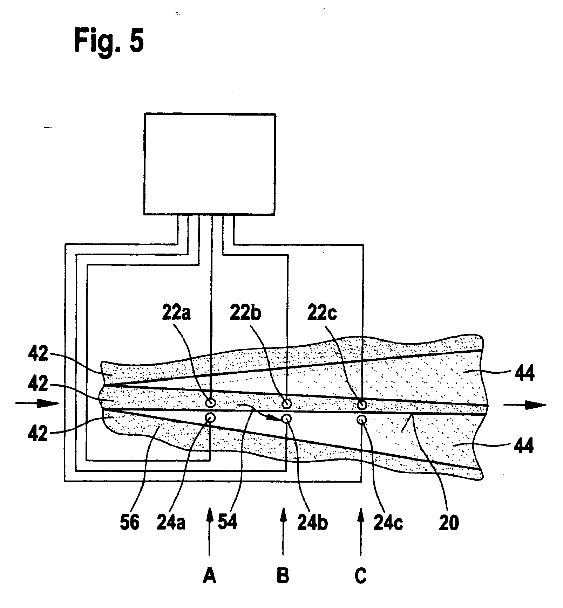

In Figur 5 sind mehrere nebeneinander liegende Filtertaschen 44 gezeigt. Anders als bei den vorhergehenden Ausführungsbeispielen sind hier jedoch nicht nur zwei Drucksensoren 22 und 24, sondern insgesamt drei Drucksensorpaare A, B, C vorhanden, mit den entsprechenden Drucksensoren 22a und 24a, 22b und 24b, sowie 22c und 24c. Die Drucksensoren 22 und 24 eines Paares A, B, C sind beidseits der Filterwand 20 einander gegenüberliegend angeordnet, wobei in Strömungsrichtung (Pfeile 50) gesehen zunächst das Drucksensorpaar A, danach mit einem Abstand das Drucksensorpaar B, und nochmals danach das Drucksensorpaar C vorgesehen ist.

Auf diese Weise kann der Druckabfall, welcher beim Durchtritt der Strömung durch die Filterwand 20 (Pfeil 54) auftritt, an unterschiedlichen Stellen der Filterwand 20 erfasst werden, was Rückschlüsse auf die örtliche Beladung der Filterwand 20 mit Rußpartikeln 56 ermöglicht.

## Patentansprüche

1. Filtereinrichtung (18), insbesondere für eine Abgasanlage (14) einer Brennkraftmaschine (10), welche Partikel (56) aus einem Gasstrom (50) herausfiltert und welche ein Gehäuse (30) und mindestens eine in dem Gehäuse (30) angeordnete Filterstruktur (38) aufweist, durch welche der Gasstrom (50) hindurchtreten kann, **dadurch gekennzeichnet, dass** die Filterstruktur (38) mindestens eine Filterwand (20) umfasst, und dass mindestens zwei paarweise angeordnete Drucksensoren (22, 24) vorgesehen sind, von denen der eine Drucksensor (22) wenigstens annähernd unmittelbar stromaufwärts und der andere Drucksensor (24) wenigstens annähernd unmittelbar stromabwärts von der Filterwand (20) angeordnet ist.

2. Filtereinrichtung (18) nach Anspruch 1, **dadurch gekennzeichnet, dass** die Filterstruktur (38) Filtertaschen (44), welche von Filterwänden (20) begrenzt werden, und einen stromaufwärts von den Filtertaschen gelegenen Strömungsabschnitt (40) aufweist, der gegenüber einem stromabwärts von der Filterstruktur (38) liegenden Bereich durch eine Dichtwand (48) abgetrennt ist, und dass die beiden Drucksensoren (22, 24) eines Drucksensorpaares zu beiden Seiten der Dichtwand (48) angeordnet sind.

3. Filtereinrichtung (18) nach einem der Ansprüche 1 oder 2, **dadurch gekennzeichnet, dass** die Filterstruktur (38) Filtertaschen (42) aufweist, welche von Filterwänden (20) begrenzt werden, und dass die beiden Drucksensoren (22, 24) eines Drucksensorpaares zu beiden Seiten einer zwischen Filterwand (20) einander wenigstens in etwa gegenüberliegend angeordnet sind.

4. Filtereinrichtung (18) nach Anspruch 4, **dadurch gekennzeichnet, dass** sie mehrere Drucksensorpaare (A, B, C) umfasst, und dass die Drucksensoren (22, 24) eines Drucksensorpaars (A, B, C) von den Drucksensoren (22, 24) eines anderen Drucksensorpaares (A, B, C) in Strömungsrichtung (50) gesehen beabstandet sind.

5. Filtereinrichtung (18) nach einem der vorhergehenden Ansprüche, **dadurch gekennzeichnet, dass** das Filtermaterial Sintermetall umfasst.

## Claims

1. Filter device (18), especially for an exhaust system (14) of an internal combustion engine (10), which filters particulates (56) out of a gas stream (50) and which has a housing (30) and at least one filter structure (38) which is arranged in the housing (30) and through which the gas stream (50) can pass, **characterized in that** the filter structure (38) comprises at least one filter wall (20), and **in that** at least two pressure sensors (22, 24) arranged in pairs are provided, of which one pressure sensor (22) is arranged at least approximately immediately upstream of the filter wall (20) and the other pressure sensor (24) is arranged at least approximately immediately downstream of the filter wall (20).

2. Filter device (18) according to Claim 1, **characterized in that** the filter structure (38) has filter pockets (44), which are delimited by filter walls (20), and a flow section (40) which is located upstream of the filter pockets and is separated from a region lying downstream of the filter structure (38) by a sealing wall (48), and **in that** the two pressure sensors (22, 24) of a pressure sensor pair are arranged on either side of the sealing wall (48).

3. Filter device (18) according to either of Claims 1 and 2, **characterized in that** the filter structure (38) has filter pockets (42) which are delimited by filter walls (20), and **in that** the two pressure sensors (22, 24) of a pressure sensor pair are arranged at least approximately opposite one another on either side of the filter wall (20).

4. Filter device (18) according to Claim 4, **characterized in that** it comprises a plurality of pressure sensor pairs (A, B, C), and **in that** the pressure sensors (22, 24) of a pressure sensor pair (A, B, C) are arranged at a distance, as seen in the direction of flow (50), from the pressure sensors (22, 24) of another pressure sensor pair (A, B, C).

5. Filter device (18) according to one of the preceding claims, **characterized in that** the filter material comprises sintered metal.

## Revendications

1. Dispositif de filtration (18), en particulier pour un système d'échappement (14) d'un moteur à combustion interne (10), qui filtre des particules (56) extraites d'un courant de gaz (50) avec une enceinte (30) et dans l'enceinte (30), au moins une structure de filtre (38) traversée par le courant de gaz (50),
**caractérisé en ce que**
la structure de filtre (38) comprend au moins une paroi de filtre (20) et au moins deux capteurs de pression (22, 24) disposés par paires, le premier capteur de pression (22) étant placé au moins presque directement en amont et l'autre capteur de pression (24) au moins presque directement en aval de la paroi de filtre (20).

2. Dispositif de filtration (18) selon la revendication 1,
**caractérisé en ce que**
la structure de filtre (38) présente des poches filtrantes (44), délimitées par des parois de filtre (20), et un segment d'écoulement (40) en amont des poches filtrantes est séparé d'une zone en aval de la structure de filtre (38) par une paroi d'étanchéité (48), et les deux capteurs de pression (22, 24) d'une paire de capteurs de pression sont sur les deux côtés de la paroi d'étanchéité (48).

3. Dispositif de filtration (18) selon l'une quelconque des revendications 1 ou 2,
**caractérisé en ce que**
la structure de filtre (38) présente des poches filtrantes (42) délimitées par des parois de filtre (20), et les deux capteurs de pression (22, 24) d'une paire de capteurs de pression sont au moins approximativement en face l'un de l'autre sur les deux côtés d'une paroi de filtre intermédiaire (20).

4. Dispositif de filtration (18) selon la revendication 4,
**caractérisé par**
plusieurs paires de capteurs de pression (A, B, C) dont les capteurs de pression (22, 24) d'une paire de capteurs de pression (A, B, C) sont espacés des capteurs de pression (22, 24) d'une autre paire de capteurs de pression (A, B, C) dans la direction de l'écoulement (50).

5. Dispositif de filtration (18) selon l'une quelconque des revendications précédentes,
**caractérisé en ce que**
le matériau du filtre comprend un métal fritté.
